(19) Europäisches Patentamt
European Patent Office
Office européen des brevets

(11) Veröffentlichungsnummer: **0 328 921 B1**

# (12) EUROPÄISCHE PATENTSCHRIFT

(45) Veröffentlichungstag der Patentschrift:
29.05.91 Patentblatt 91/22

(51) Int. Cl.⁵ : **E04C 2/26**, E04C 2/24,
B32B 15/08

(21) Anmeldenummer: 89101537.2

(22) Anmeldetag: 30.01.89

(54) Plattenförmiges Bauelement in Sandwichbauweise.

(30) Priorität: 17.02.88 DE 8802020 U

(43) Veröffentlichungstag der Anmeldung:
23.08.89 Patentblatt 89/34

(45) Bekanntmachung des Hinweises auf die
Patenterteilung:
29.05.91 Patentblatt 91/22

(84) Benannte Vertragsstaaten:
BE DE ES FR GB IT LU NL

(56) Entgegenhaltungen:
EP-A- 0 068 784
DE-A- 1 559 529
DE-A- 2 449 329
FR-A- 1 507 312
GB-A- 1 445 787

(73) Patentinhaber: INNOVA GMBH Mobile
Systeme
Daimlerstrasse 18
W-7900 Ulm (DE)

(72) Erfinder: Strobel, Georg
Biberacher Strasse 110
W-7900 Ulm (DE)
Erfinder: Häge, Walter
Fünf-Bäume-Weg 238
W-7900 Ulm (DE)

(74) Vertreter: Kohlmann, Karl Friedrich, Dipl.-Ing.
et al
Hoffmann, Eitle & Partner Arabellastrasse 4
(Sternhaus)
W-8000 München 81 (DE)

**Beschreibung**

Die vorliegende Erfindung betrifft ein plattenförmiges Bauelement in Sandwichbauweise, mit einem plattenförmigen Kern aus schwer entflammbarem Hartschaum, einer auf jeder Plattenseite des Kerns aufgebrachten Stützschicht aus glasfaserverstärktem Polyester, jeweils einer auf die Stützschicht aufgebrachten Verbundplatte, vorzugsweise aus Sperrholz oder Preßspanmaterial, sowie einer jeweils auf der dem Kern abgewandten Seite der Verbundplatte aufgebrachten Laminatschicht aus glasfaserverstärktem Polyester mit Gelcoatdeckschicht.

Plattenförmige Bauelemente in Sandwichbauweise sind bekannt. So ist in der DE-OS 24 49 329 eine Trennwand beschrieben, die aus einem Kern aus Bleiblech und aus Schichten aus nachgiebigem, porösen Material bestehen, die über Leimschichten auf dem Kern angebracht sind. Auf die Schichten aus porösem Material sind wiederum auf der Außenseite Bauplatten angebracht, die noch mit außenseitigen Metallblechplatten versehen sein können. Ferner sind plattenförmige Bauelemente in Sandwichbauweise der eingangs genannten Art aus dem Firmenprospekt "HIGH TECHNOLOGY im Kühlwagenbau" der Firma F.X. Kögel GmbH und Co., Fahrzeugwerke, beschrieben. Sie dienen zur Erstellung von Wänden, Decken und Böden von immobilen oder mobilen Räumen jeglicher Art, zur Erstellung von Verkleidungen, Abtrennungen, Konstruktionselementen und dergleichen. Sie haben unter anderem den Vorteil, daß sie sehr widerstandsfähig und problemlos zu reinigen sind und gute Dämmeigenschaften aufweisen. Plattenförmige Bauelemente dieser Art sind daher in einem relativ großen Anwendungsbereich einsetzbar.

Aufgabe der vorliegenden Erfindung ist es, ein plattenförmiges Bauelement dieser Art mit geringem technischen Aufwand derart weiterzubilden, daß das Anwendungsgebiet noch größer wird.

Diese Aufgabe wird erfindungsgemäß gelöst, daß beide Verbundplatten aus schwer entflammbarem Material hergestellt werden und daß auf die Stützschicht einer Plattenseite eine Metalleinlage aufgebracht wird, welche durch eine weitere, mit der zugeordneten Verbundplatte verbundene Stützschicht aus glasfaserverstärktem Polyester abgedeckt ist.

Durch die erfindungsgemäßen Merkmale ist ein plattenförmiges Bauelement geschaffen, das auch in Bereichen eingesetzt werden kann, in denen neben üblichen statischen und hygienischen Anforderungen auch brand-, strahlen- und abschirmungsschutztechnische Anforderungen gestellt werden. Plattenförmige Bauelemente der erfindungsgemäßen Art sind daher in einem erheblich größeren Anwendungsbereich einsetzbar, als plattenförmige Bauelemente der eingangs beschriebenen Art. Dieser Vorteil wird dabei mit erstaunlich geringem zusätzlichen technischen Aufwand erreicht.

Mit dem Begriff "schwer entflammbare Baustoffe" sind solche Material gemeint, die nach DIN 4102 der Baustoffklasse B1 zuzurechnen sind.

Die Metalleinlage kann je nach den gestellten Anforderungen in der verschiedensten Weise ausgebildet sein. So können zur Abschirmung magnetischer Wellen als Metalleinlage Metallgewebe eingesetzt werden. Im Falle von Strahlenschutzvorgaben, wie sie beispielsweise für Röntgenräume bestehen, kann die Metalleinlage aus einem Bleiblech bestehen. Je nach der geforderten Abschirmung kann das Bleiblech eine Stärke zwischen 0,5 und 3 mm aufweisen. Versuche haben ergeben, daß gerade im Falle von Strahlenschutzvorgaben erfindungsgemäß ausgebildete Platten auch im Falle des Einsatzes relativ dünner Bleibleche erstaunlich hohe Absorptionswerte erreichen. Im Falle von Brandschutzvorgaben ist es zweckmäßig die Metalleinlage in Form einer Metallblechplatte auszubilden.

Um im Falle von Brandschutzvorgaben auch die Brandeigenschaften der auf die Verbundplatte aufgebrachten Laminatschicht aus glasfaserverstärktem Polyester mit Gelcoatdeckschicht zu verbessern, ist es gemäß einer vorteilhaften Weiterbildung zweckmäßig der Laminatschicht Aluminiumhydroxide beizumischen.

Vorteilhaft ist es in einem solchen Falle auch als Kern einen schwer entflammbaren PU-Schaum der Baustoffklasse B1 einzusetzen.

Zur Erfüllung von Brandschutzvorgaben eignen sich insbesondere Verbundplatten, die unbrennbare, natürliche, aufgeblähte Mineralstoffe als Rohmaterial enthalten, das mit einem unbrennbaren Leim gebunden ist.

Um im Brandfalle sicherzustellen, daß das plattenförmige Bauelement seine ursprüngliche Form über einen möglichst langen Zeitraum aufrecht erhält, ist es zweckmäßig die Stützschichten über einen Steg miteinander zu verbinden. Dieser Steg wird vorteilhafterweise an denjenigen Stellen angeordnet, an denen die Platten für den Kern gestoßen sind. In solchen Fällen ist es zweckmäßig, den Steg etwa Z-förmig zu gestalten und aus glasfaserverstärktem Polyester auszubilden. Derartige Stege können vorteilhaft im Naß-in-Naß-Fertigungsverfahren hergestellt werden und erbringen optimale statische Ergebnisse.

Der Steg kann jedoch auch als leisten- oder balkenförmiges Bauelement, beispielsweise in Form einer Stützeinlage aus Holz ausgebildet sein. Derartige Stützeinlagen sind insbesondere im Stoßbereich von plattenförmigen Bauelementen vorteilhaft. Derartige Stützeinlagen können im Bedarfsfalle zwischen zwei im Abstand zueinander angeordneten, Z-förmigen Stegen aus glasfaserverstärktem Polyester angeordnet und von diesen umschlossen sein.

Insbesondere dann, wenn hohe hygienische und bewitterungstechnische Vorgaben bestehen, ist es vorteilhaft, die Stirnkanten der plattenförmigen Bauelemente jeweils mit einer Laminatschicht aus glasfaserverstärktem Polyester mit Gelcoatdeckschicht auszustatten, die einstückig in die Laminatschicht mit Gelcoatdeckschicht der Seitenflächen der Bauelemente übergehen. In einem solchen Falle ist das gesamte plattenförmige Bauelement mit einer einstückigen Laminatschicht mit Gelcoatdeckschicht umgeben, so daß das Bauelement höchsten hygienischen oder bewitterungstechnischen Anforderungen gerecht wird.

Die Schichtstärke der Schichten des erfindungsgemäßen plattenförmigen Bauelementes können dem jeweiligen Verwendungszweck und den jeweiligen Vorgaben entsprechend bemessen und gestaltet sein. So kann beispielsweise die Laminatschicht mit Gelcoatdeckschicht eine Stärke zwischen 0,5 mm und 3,0 mm aufweisen. Für die Verbundplatte können Stärken zwischen 3 und 30 mm gewählt werden. Die Kernstärke kann je nach Verwendungszweck zwischen 45 mm und 135 mm betragen.

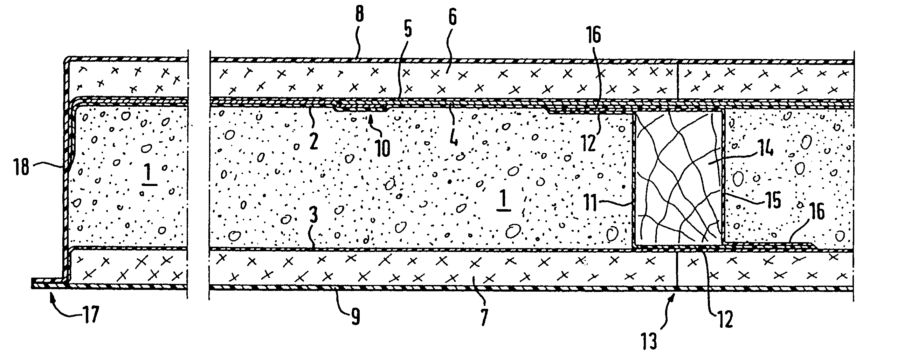

Im folgenden ist zur weiteren Erläuterung und zum besseren Verständnis der Erfindung ein Ausführungsbeispiel unter Bezugnahme auf die beigefügte Zeichnung näher beschriebene

Die Zeichnung zeigt schematisch in einem Querschnitt teilweise abgebrochen eine bevorzugte Ausführungsform eines plattenförmigen Bauelementes in Sandwichbauweise, das hohe brand- und strahlenschutztechnische Anforderungen erfüllt.

Wie der Zeichnung zu entnehmen ist, besitzt das plattenförmige Bauelement einen plattenförmigen Kern 1 aus PU-Schaum der Baustoffklasse B1. Auf jeder Plattenseite dieses Kerns 1 ist eine Stützschicht 2 bzw. 3 aus glasfaserverstärktem Polyester angeordnet. An die Stützschicht 2 schließt sich eine Metalleinlage 4 an, die im vorliegenden Ausführungsbeispiel aus einem dünnen Bleiblech besteht. Die Metalleinlage 4 ist dann auf der dem Kern 1 entgegengesetzten Seite mit einer weiteren Stützschicht 5 aus glasfaserverstärktem Polyester abgedeckt. An die Stützschicht 5 und die Stützschicht 3 schließt sich dann jeweils eine Verbundplatte 6 bzw. 7, vorzugsweise aus Sperrholz oder Preßspanmaterial an, die jeweils auf ihrer dem Kern 1 abgewandten Seite mit einer Laminatschicht 8 bzw. 9 aus glasfaserverstärktem Polyester abgedeckt ist und eine Gelcoatdeckschicht aufweist.

Da Bleibleche nicht in jeder Breite zur Verfügung stehen, muß die Metalleinlage 4 an bestimmten Stellen gestoßen werden. Ein derartiger Stoß 10 ist in der Figur ebenfalls dargestellt. Um im Stoßbereich eine "Abschirmungslücke" zu vermeiden, sind die Randbereiche der gestoßenen Bleibleche jeweils einander überlappend angeordnet.

Die plattenförmigen Kerne aus PU-Schaum müssen aufgrund der handelsüblichen Plattengrößen bei großflächigen plattenförmigen Bauelementen ebenfalls gestoßen werden. In diesem Bereich ist deshalb ein Steg 11 aus glasfaserverstärktem Polyester mit einem Z-förmigen Querschnitt angeordnet. Die beiden Schenkel 12 des Steges 11 sind jeweils mit der Stützschicht 2 bzw. 3 verbunden

Aufgrund des Einsatzes handelsüblicher Größen müssen auch die Verbundplatten 6 bzw. 7 gestoßen werden. Es ist zweckmäßig in diesem Stoßbereich (13) Stege als Stützeinlage vorzusehen. Im vorliegenden Ausführungsbeispiel besteht diese Stützeinlage aus einem leisten- oder balkenförmigen Bauelement 14 aus Holz. Dieses leisten- oder balkenförmige Bauelement 14 ist auf der dem Steg 11 entgegengesetzten Seite mit einem Steg 15 abgedeckt, dessen freie Schenkel 16 jeweils mit den Schenkeln 12 des Steges 11 verbunden sind.

Im linken abgebrochenen Teil der Zeichnung ist ein Ausführungsbeispiel einer Randausbildung des plattenförmigen Bauelementes dargestellt. Bei diesem Ausführungsbeispiel ist die in der Zeichnung unten liegende Laminatschicht mit Gelcoatschicht zur Bildung eines Absatzes 17 etwas über den Seitenrand der Verbundplatten 6, 7 und des plattenförmigen Kernes 1 hinausgezogen. Wie aus der Zeichnung zu ersehen ist, sind darüberhinaus die Stirnkanten der Verbundplatten 6 und 7 und des plattenförmigen Kernes 1 mit einer Laminatschicht 18 aus glasfaserverstärktem Polyester abgedeckt, die ebenfalls mit einer Gelcoatschicht versehen ist. Diese Laminatschicht ist einstückig mit den Laminatschichten 8 und 9 verbunden.

Zur Herstellung eines erfindungsgemäßen plattenförmigen Bauelementes wird auf einer Unterlage zuerst die Gelcoatschicht aufgetragen und im Anschluß daran in diese die Laminatschicht 9 eingebettet. Vor dem Aushärten wird dann die Verbundplatte 7 in die Laminatschicht 9 eingebettet und die Oberseite der Verbundplatte 7 mit der Stützschicht 3 aus glasfaserverstärktem Polyester abgedeckt. In die noch nicht ausgehärtete Stützschicht 3 wird dann der plattenförmige Kern 1 in Form von Einzelplatten eingesenkt.

Zur Ausbildung des Steges 11 werden im Randbereich der Platten des plattenförmigen Kernes 1 im Naß-in-Naß-Verfahren Glasfasermattenstreifen auf die Stützschicht 3 (zur Bildung der unteren Schenkel 12), auf die Stirnseite der Platten (zur Bildung des Mittelteiles) und auf die Oberseite der Platten (zur Bildung der oberen Schenkel 12) aufgebracht. Da die mit Polyester getränkten Glasfasermattenstreifen direkt aufgetragen werden, entfällt ein separater Formungsvorgang zur Herstellung der Stege 11. In die noch nicht ausgehärteten Mattenstreifen des Steges 11 wird dann das leisten- bzw. balkenförmige Bauelement 14 eingesenkt und im Naß-in-Naß-Verfahren mit weiteren mit Polyester getränkten Mattenstreifen der Steg 15 mit den Schenkeln 16 hergestellt. Im Anschluß daran wird auf die Oberseite des plattenförmigen Kernes und die Schenkel 12 und 16 die Stützschicht 2 aus glasfaserverstärktem Polyester aufgebracht und in diese Stützschicht die Metalleinlage 4 in Form des Bleibleches eingesenkt. Im Bereich des Stoßes 10 wird dabei das Metallblech überlappend angeordnet. Auf die Bleiblechlage wird dann eine weitere Stützschicht 5 aus glasfaserverstärktem Polyester aufgebracht und in dieses unter Druck die Verbundplatte 6 eingesenkt. Durch das Aufbringen von Druck auf die Verbundplatte 6 werden Lufteinschlüsse ausgepreßt und eine innige Verbindung zwischen den einzelnen Schichten hergestellt und im übrigen im Bereich des Stoßes 10 die Überlappung der Metalleinlage 4 in das relativ weiche Material des plattenförmigen Kernes 1 eingedrückt, so daß sich die in der Figur dargestellte Konfiguration ergibt. Auch die Schenkel 12 und 16 der Stege 11 und 15 senken sich bei diesem Vorgang in das weiche Material des plattenförmigen Kernes 1 ein, wie aus der Figur gut erkennbar ist.

In dem in der Zeichnung auf der linken Seite dar-gestellten Randbereich des plattenförmigen Bauele-mentes werden die Stützschichten 3, 2 und 5 jeweils an der Stirnseite des plattenförmigen Kernes 1 bzw. der Verbundplatte 7 angelegt.

Als abschließender Vorgang wird dann auf der Oberseite die Laminatschicht 8 mit Gelcoatdeckschicht aufgebracht, diese über die Stirnseiten als Schicht 18 nach unten geführt und zusammen mit der Laminatschicht 9 der Unterseite verbunden, so daß sich der Absatz 17 bildet. Auf diese Weise ist – wie eingangs bereits erwähnt – ein allseitig geschlosse-nes plattenförmiges Bauelement geschaffen.

**Ansprüche**

1. Plattenförmiges Bauelement in Sandwichbauweise, mit einem plattenförmigen Kern (1) aus schwer entflammbarem Hartschaum, einer auf jeder Plattenseite des Kerns aufgebrachten Stützschicht (2, 3) aus glasfaserverstärktem Polyester, jeweils einer auf die Stützschicht aufgebrachten Verbundplatte (6, 7), vorzugsweise aus Sperrholz oder Preßspanmaterial, sowie einer jeweils auf der dem Kern (1) abgewandten Seite der Verbundplatte aufgebrachten Laminatschicht (8, 9) aus glasfaserverstärktem Polyester mit Gelcoatdeckschicht, dadurch gekennzeichnet, daß beide Verbundplatten (6, 7) aus schwer entflammbarem Material bestehen und daß auf die Stützschicht (2) einer Plattenseite eine Metalleinlage (4) aufgebracht ist, welche durch eine weitere, mit der zugeordneten Verbundplatte (6) verbundene Stützschicht (5) aus glasfaserverstärktem Polyester abgedeckt ist.

2. Plattenförmiges Bauelement nach Anspruch 1, dadurch gekennzeichnet, daß die Metalleinlage (4) eine Metallblechplatte ist.

3. Plattenförmiges Bauelement nach Anspruch 1, dadurch gekennzeichnet, daß die Metalleinlage (4) ein Metallgewebe ist.

4. Plattenförmiges Bauelement nach Anspruch 2, dadurch gekennzeichnet, daß die Metallblechplatte aus Blei besteht.

5. Plattenförmiges Bauelement nach Anspruch 1, dadurch gekennzeichnet, daß die Laminatschichten (8, 9) Aluminium-Hydroxid enthalten.

6. Plattenförmiges Bauelement nach Anspruch 1, dadurch gekennzeichnet, daß der Hartschaum ein schwer entflammbarer PU-Schaum ist.

7. Plattenförmiges Bauelement nach Anspruch 1, dadurch gekennzeichnet, daß die Verbundplatten (6, 7) unbrennbare, natürliche aufgeblähte Mineralstoffe enthalten, die mit einem unbrennbaren Leim gebunden sind.

8. Plattenförmiges Bauelement nach Anspruch 1, dadurch gekennzeichnet, daß die Stützschichten (2, 3) über einen Steg (11, 15) miteinander verbunden sind.

9. Plattenförmiges Bauelement nach Anspruch 8, dadurchg gekennzeichnet, daß der Steg (11) einen Z-förmigen Querschnitt aufweist und aus glasfaserverstärktem Polyester besteht.

10. Plattenförmiges Bauelement nach Anspruch 8, dadurch gekennzeichnet, daß der Steg ein leisten-oder balkenförmiges Bauelement (14) ist.

11. Plattenförmiges Bauelement nach einem oder mehreren der vorhergehenden Ansprüche, dadurch gekennzeichnet, daß die Stirnkanten des plattenförmigen Bauelementes mit einer Laminatschicht (18) aus glasfaserverstärktem Polyester mit Gelcoatdeckschicht versehen sind, die einstückig in die Laminatschichten (8, 9) mit Gelcoatdeckschicht der Seitenflächen des Bauelementes übergeht.

**Claims**

1. Panel-like structural member of sandwich construction, with a panel-like core (1) of low-inflammability hard foam, a supporting layer (2, 3) of glass fibre-reinforced polyester applied to each side of the core panel, a composite panel (6, 7) preferably made of plywood or chipboard applied to each supporting layer, and a laminate layer (8, 9) of glass fibre-reinforced polyester with a gel coat covering layer applied to each side of the composite panel facing away from the core (1), characterised in that both composite panels (6, 7) are made of low-inflammability material and that to the supporting layer (2) on one side of the panel is applied a metal inlay (4) which is covered by an additional supporting layer (5) of glass fibre-reinforced polyester laminated to the associated composite panel (6).

2. Panel-like structural member according to claim 1, characterised in that the metal inlay (4) is a metal sheet.

3. Panel-like structural member according to claim 1, characterised in that the metal inlay (4) is a metal fabric.

4. Panel-like structural member according to claim 2, characterised in that the metal sheet is made of lead.

5. Panel-like structural member according to claim 1, characterised in that the laminate layers (8, 9) contain aluminium hydroxide.

6. Panel-like structural member according to claim 1, characterised in that the hard foam is a low-inflammability PU foam.

7. Panel-like structural member according to claim 1, characterised in that the composite panels (6, 7) contain non-inflammable, natural, expanded mineral materials which are bonded with a non-inflammable glue.

8. Panel-like structural member according to claim 1, characterised in that the supporting layers (2, 3) are joined to each other by a web (11, 15).

9. Panel-like structural member according to claim 8, characterised in that the web (11) has a Z-shaped cross-section and is made of glass fibre-reinforced polyester.

10. Panel-like structural member according to claim 8, characterised in that the web is a batten-like or beam-like structural member (14).

11. Panel-like structural member according to one or more of the preceding claims, characterised in that the edges of the panel-like structural member are provided with a laminate layer (18) of glass fibre-reinforced polyester with gel coat covering layer, which merges integrally with the laminate layers (8, 9) with gel coat covering layer of the side faces of the structural member.

## Revendications

1. Panneau de construction stratifié, comprenant une âme (1) en forme de panneau, faite d'une mousse dure difficilement inflammable, une couche d'appui (2, 3) en polyester renforcé de fibre de verre, appliquée sur chacune des grandes faces de l'âme, une plaque composite (6, 7), de préférence faite de bois contre-plaqué ou d'un matériau cellulosique comprimé (ou de "press-pahn"), appliquée sur la couche d'appui, ainsi qu'une couche de laminé (8, 9), faite de polyester renforcé de fibre de verre, avec une couche extérieure de gel ("gel-coat"), appliquée sur la face de la plaque composite qui est à l'opposé de l'âme (1), caractérisé en ce que les deux plaques composites (6, 7) sont faites d'une matière difficilement inflammable et en ce que, sur la couche d'appui (2) d'une face du panneau, est appliquée une insertion métallique (4) qui est recouverte d'une autre couche d'appui (5) en polyester renforcé de fibre de verre qui est fixée à la plaque composite (6) correspondante.

2. Panneau de construction selon la revendication 1, caractérisé en ce que l'insertion métallique (4) est une plaque de feuille métallique.

3. Panneau de construction selon la revendication 1, caractérisé en ce que l'insertion métallique (4) est une toile métallique.

4. Panneau de construction selon la revendication 2, caractérisé en ce que la plaque de feuille métallique est composée de plomb.

5. Panneau de construction selon la revendication 1, caractérisé en ce que les couches de laminé (8, 9) contiennent de l'hydroxyde d'aluminium.

6. Panneau de construction selon la revendication 1, caractérisé en ce que la mousse dure est une mousse de PU difficilement inflammable.

7. Panneau de construction selon la revendication 1, caractérisé en ce que les plaques composites (6, 7) contiennent des matières minérales incombustibles, naturelles, soufflées, qui sont liées à l'aide d'une colle incombustible.

8. Panneau de construction selon la revendication 1, caractérisé en ce que les couches d'appui (2, 3) sont assemblées l'une à l'autre par l'intermédiaire d'une entretoise (11, 15).

9. Panneau de construction selon la revendication 8, caractérisé en ce que l'entretoise (11) présente une section en Z et est composée de polyester renforcé de fibre de verre.

10. Panneau de construction selon la revendication 8, caractérisé en ce que l'entretoise est un composant (14) du type barre ou poutre.

11. Panneau de construction selon une ou plusieurs des revendications précédentes, caractérisé en ce que les chants du panneau de construction sont munis d'une couche de laminé (18) faite de polyester renforcé de fibre de verre muni d'une couche extérieure de gel ("gelcoat"), qui se termine dans les couches de laminé (8, 9) munies d'une couche extérieure de gel ("gelcoat") des grandes surfaces du panneau de construction en faisant corps avec ces couches.